# EUROPÄISCHE PATENTSCHRIFT

(11) **EP 0 447 875 B1**
(45) Veröffentlichungstag und Bekanntmachung des Hinweises auf die Patenterteilung: **14.09.1994**
(21) Anmeldenummer: 91103359.5
(22) Anmeldetag: 06.03.1991
(51) Int. Cl.: B01D 29/21

(54) **Filterelement aus einem zick-zack-förmig gefalteten, stern- oder plattenförmig angeordneten Filtermaterial**
Filter element comprising filter material either pleated in zig-zag fashion or in the shape of a star or a slab
Elément filtrant, ayant la forme d'une plaque ou plié en zigzag ou en étoile

(30) Priorität: 22.03.1990 DE 4009246
(43) Veröffentlichungstag der Anmeldung: 25.09.1991
(73) Patentinhaber: KNECHT FILTERWERKE GMBH, D-70376 Stuttgart (DE)
(72) Erfinder: Widmann, Sigbert, W-7322 Donzdorf (DE)
(74) Vertreter: Pfusch, Volker, Dipl.-Ing.

(56) Entgegenhaltungen:
- EP-A- 0 078 419
- US-A- 4 442 004
- US-A- 4 853 123

## Beschreibung

Die Erfindung betrifft ein Filterelement nach dem Oberbegriff des Patentanspruchs 1.

Bei in dem Stand der Technik unter anderem aus DE-C-3514778 bekannten Filterelementen, bei denen das Dichtmaterial aus einem plastifizierbaren Kunststoff wie beispielsweise einem Thermoplasten, besteht, wird die Verbindung zwischen Bahnenmaterial und Dichtung dadurch erreicht, daß das Filtermaterial in einen plastifizierten Oberflächenbereich des Dichtmaterials eingebracht ist.

In Fällen, in denen das Dichtmaterial eine Platte ist, kommt es häufig darauf an, diese durch Wärme oberflächlich so zu plastifizieren, daß die Platte sich nicht insgesamt verformt. Zu diesem Zweck wird lediglich die Oberfläche der Platte direkt oder indirekt durch Kontakt bzw. Wärmestrahlung erhitzt.

Nachteilig bei diesen bekannten Verbindungsarten zwischen Dichtungs- und Filterbahnmaterial ist, daß es relativ viel Zeit in Anspruch nimmt, die Plattenoberfläche zu erhitzen, wodurch sich insgesamt eine relativ lange Prozeßzeit ergibt. Ein weiterer Nachteil besteht darin, daß durch das Aufbringen der Wärme auf die Oberfläche der Platte durch direkten Wärmeübergang oder durch Strahlung Wärme über den zu plastifizierenden Bereich hinaus in die Platte eindringt (hoher Energieverlust), weshalb diese zur Aufrechterhaltung der Stabilität verfahrensbedingt eine größere Dicke aufweisen muß als es für die fertige Verbindung stabilitätsmäßig notwendig wäre. Es wird also hier letztendlich mehr Material eingesetzt als tatsächlich notwendig wäre.

Diese Nachteile zu vermeiden, ist die Aufgabe der vorliegenden Erfindung, nach der insbesondere eine möglichst dünne Endscheibe angestrebt wird, bei der ohne diese zu verformen, ein anzubindendes Filtermaterial einplastizifiert werden kann. Dabei soll das Filtermaterial bei dem Einplastifizieren möglichst keine Verformung erleiden.

Gelöst wird diese Aufgabe durch eine Ausbildung des gattungsgemäßen Filterelementes nach den kennzeichnenden Merkmalen des Patentanspruchs 1.

Zweckmäßige Ausgestaltungen sind Gegenstand der Unteransprüche.

Ultraschallschweißen ist an sich bekannt. Insbesondere nicht bekannt ist jedoch, das Dichtmaterial und das Filtermaterial an den Filterbahnlängskanten durch oberflächliches Plastifizieren eines der beiden Materialien (örtlich begrenzte Kontaktfläche) zu verbinden, und dabei die notwendige Wärme durch gegenseitige Reibung im Kontaktbereich zu erzielen, wobei die Reibung allein durch die Schwingungen im Ultraschallbereich erzeugt wird, die einem der beiden Teile aufgezwungen werden. Dies ist das Grundprinzip der vorliegenden Erfindung. Die Ultraschallschwingungen werden dabei über eine aus der Ultraschallschweißung bekannte Sonotrode übertragen.

Soweit aus US-A-4,442,004 Schweißverbindungen zwischen Filtermaterial und einer Endscheibe bekannt sind, können diese mit der vorliegenden Erfindung nicht verglichen werden. Denn bei jenen Schweißverbindungen werden die beiden zu verbindenden Teile jeweils gemeinsam aufgeschmolzen und miteinander verschmolzen, was bei der Erfindung gerade nicht der Fall ist.

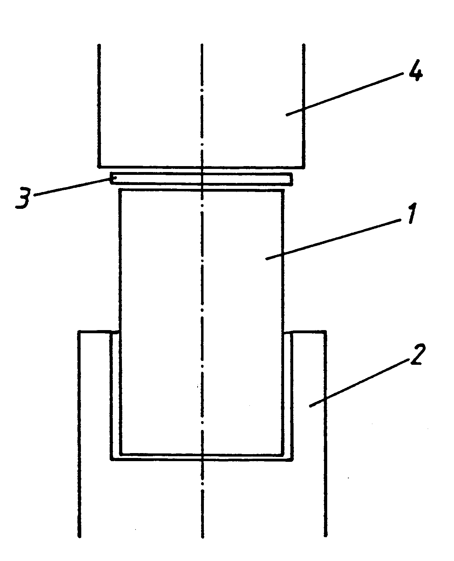

Ein Ausführungsbeispiel der Erfindung ist in der Zeichnung dargestellt, die einen Faltenstern in einer Vorrichtung zum Anplastifizieren einer Endscheibe als Dichtung zeigt.

Ein Faltenstern 1 aus einem Filterbahnenmaterial aus Papier ist fertig gefaltet in einer Aufnahmevorrichtung 2 gelagert. Auf seine eine Stirnseite ist eine ringförmige Endscheibe 3 aus einem Thermoplasten lose aufgelegt. Die Stirnkanten der einzelnen Falten des Faltensternes 1 liegen in einer Ebene, damit jede Stirnkante direkten Kontakt zu der aufliegenden Endscheibe hat. Die Endscheibe 3 ist in einer Sonotrode 4 eines Ultraschallgerätes gehaltert.

Die Verbindung zwischen den Stirnkanten der einzelnen Falten des Faltensternes 1 und der aufliegenden Endscheibe 3 wird wie folgt erreicht.

Die Sonotrode 4 führt senkrecht zur Verbindungsebene zwischen Endscheibe 3 und Faltenstern 1 hochfrequente Schwingungen aus. Während des Schwingens übt die Sonotrode gleichzeitig einen Druck auf die Endscheibe in Richtung des Faltensternes aus. Durch die Schwingungen entsteht zwischen der Endscheibe 3 und den Stirnkanten der Falten des Faltensternes 1 Reibungswärme, die zu einem lokalen oberflächlichen Plastifizieren des Endscheibenmaterials führt. Bei dem Plastifizieren des Endscheibenmaterials während des Schwingvorganges der Sonotrode dringen die Faltenkanten in den plastisch gewordenen Endscheibenbereich ein. Nach dem Erkalten des durch die Reibungswärme plastifizierten Endscheibenbereiches sind die Faltenkanten in das Endscheibenmaterial fest und dicht eingebunden. Die Tiefe, in der die einzelnen Falten in das Endscheibenmaterial eingebunden sind, wird durch das Maß bestimmt, um das die Sonotrode 4 die Endscheibe während des Schwingvorganges in Richtung auf den Faltenstern verschiebt. Bei diesem erfindungsgemäßen Verfahren ist es möglich, die Falten in einem sehr geringen plastifizierten Tiefenbereich fest und dicht einzubinden. Da sich die Falten im Bereich ihrer Stirnkanten beim Annähern der Sonotrode verformen sollen, muß der Verschiebeweg der Sonotrode nicht der Tiefe des plastifizierten Bereiches entsprechen. Es ist vielmehr so, daß der plastifizierte Bereich in seiner Tiefe geringer als der Verschiebeweg der Sonotrode ist. Durch die extrem geringen Plastifiziertiefen, die nach dem erfindungsgemäßen Verfahren möglich sind, lassen sich die Endscheiben insgesamt optimal dünn ausführen. Ihre Dicke kann allein nach den Festigkeitsanforderungen am fertigen Produkt ausgerichtet werden. Der plastifizierte Bereich, in den das Filtermaterial eindringt, kann beispielsweise eine Tiefe von nur etwa 0,5 mm besitzen.

Nach dem beschriebenen Herstellungsverfahren kann in gleicher Weise die Abdichtung der Stirnkanten eines in einer Ebene zu einem Plattenfilterelement gefalteten Filterbahnmaterials gedichtet werden. Das Dichtmaterial hat in diesem Fall die Form eines Streifens. Das Dichtmaterial muß nicht insgesamt aus plastifizierbarem Material sein. Es ist auch möglich, ein nicht plastifizierbares Material als Basismaterial zu verwenden, auf das lediglich eine dünne plastifizierbare Materialschicht aufgebracht ist. In diesem Fall dient dann nur diese plastifizierbare Schicht als Material zum Einbetten des Filtermaterials.

Ein Vorteil der erfindungsgemäßen Ausführung besteht u.a. darin, daß bei einem konstant vorgegebenen Einbauraum für ein Filterelement die wirksame Filterfläche vergrößert werden kann. Der Grund hierfür ist, daß einerseits die Endscheiben dünner ausgeführt werden können und andererseits nur ein äußerst schmaler Bereich des Filterbahnmaterials für die Verbindung zur Endscheibe bzw. zum Dichtmittel von der wirksamen Filterfläche verlorengeht.

## Patentansprüche

1. Verfahren zur Herstellung eines Filterelementes aus einem zick-zack-förmig gefalteten stern- oder plattenförmig angeordneten Filterbahnmaterial mit einem die Längskanten der Filterbahn in deren gemeinsamer Ebene abdeckenden Dichtmaterial, das die Form üblicher Endscheiben haben kann, und bei dem nur das Dichtmaterial ein unter Wärme plastifizierbares Material, insbesondere ein Thermoplast ist, in das die Längskanten des Filterbahnmaterials zur Bildung einer festen Verbindung zwischen dem Filter- und Dichtmaterial über eine bestimmte Tiefe eingeformt sind,
**dadurch gekennzeichnet,**
daß derjenige Bereich, in dem die Längskanten in das Dichtmaterial eingeformt werden, durch hochfrequentes Schwingen (Ultraschall) plastifiziert wird und die Längskanten des Filterbahnmaterials dabei gleichzeitig in den plastifizierten Bereich eingedrückt werden.

2. Verfahren nach Anspruch 1,
**dadurch gekennzeichnet,**
daß das Dichtmaterial eine dünne auf ein nicht plastifizierbares Material aufgebrachte Schicht ist.

## Claims

1. A method of producing a filter element from a filter web material laid in zig-zag folds and disposed in stellate or panel fashion with a sealing material covering the longitudinal edges of the filter web in their common plane and which may take the form of conventional end discs and in which only the sealing material is a material which can be plasticised under heat and is in particular a thermoplastic material into which the longitudinal edges of the filter web material are moulded over a specific depth in order to form a fixed connection between the filter material and the sealing material, characterised in that the area in which the longitudinal edges are integrally moulded into the sealing material is plasticised by high frequency (ultrasonic) oscillation and in that the longitudinal edges of the filter web material are at the same time impressed into the plasticised area.

2. A method according to claim 1, characterised in that the sealing material is a thin coating applied to a non-plasticisable material.

## Revendications

1. Procédé de fabrication d'un élément filtrant à partir d'une bande filtrante pliée en zigzag ou disposée en étoile ou en plaque, comprenant un matériau d'étanchéité qui recouvre les arêtes longitudinales de la bande filtrante dans leur plan commun et qui peut présenter la forme des disques d'extrémité courants, et selon lequel seul le matériau d'étanchéité est une matière plastifiable à chaud, en particulier une matière thermoplastique, dans laquelle les arêtes longitudinales de la bande filtrante sont incorporées sur une profondeur déterminée pour former une liaison solide entre le matériau filtrant et le matériau d'étanchéité, **caractérisé en ce** que la zone dans laquelle les arêtes longitudinales sont incorporées dans le matériau d'étanchéité, est plastifiée par oscillation à haute fréquence (ultrasons), et que lesdites arêtes longitudinales de la bande filtrante sont alors enfoncées simultanément dans la zone plastifiée.

2. Procédé selon la revendication 1, caractérisé en ce que le matériau d'étanchéité est une couche mince appliquée sur une matière non plastifiable.
